# EUROPEAN PATENT APPLICATION

(11) **EP 3 647 616 A1**
(43) Date of publication of application: **06.05.2020**
(21) Application number: 19205003.7
(22) Date of filing: 24.10.2019
(51) Int. Cl.: F16C 33/46, F16C 33/50, F16C 33/56, F16C 33/49

(54) **BEARING AND SPEED REDUCER**

(30) Priority: 31.10.2018 JP 2018204601
(71) Applicant: Nidec-Shimpo Corporation, Nagaokakyo-city, Kyoto 617-0833 (JP)
(72) Inventor: TSUBONE, Taihei, Kyoto, 617-0833 (JP); SUGISHITA, Kenji, Kyoto, 617-0833 (JP)
(74) Representative: Becker & Kurig Partnerschaft Patentanwälte PartmbB

(57) **Abstract**

A bearing (40) includes an inner ring (45), a plurality of rollers (43), and a first cage (41) and a second cage (42). The first cage includes a first rear ring (413), a front ring (412), and a plurality of first columnar parts (411). The second cage includes a second rear ring (421) and a second columnar part (422). The second cage is made of an oleoresin material. The second columnar part includes a central part (422a) which overlaps a virtual cylindrical surface (E) passing through a central line of the plurality of rollers, an outer part (422b) positioned on a radially outward side of the central part, and an inner part (422c) positioned on a radially inward side of the central part. The outer part includes a widened part (422f) having a circumferential width larger than that of the central part.

## Description

### BACKGROUND

### Technical Field

The disclosure relates to a bearing and a speed reducer.

### Description of Related Art

Conventionally, a bearing including an inner ring, a plurality of rollers held by the inner ring, and a plurality of spacers that maintain intervals between the respective rollers is known. Also, a speed reducer including such a bearing is known. A bearing of this type is disclosed, for example, in Japanese Patent Laid-Open No. H11-44323.

A cylindrical roller bearing disclosed in Japanese Patent Laid-Open No. H11-44323 includes a plurality of cylindrical rollers (12) held by an inner ring, and a plurality of straddling parts (22) that maintain intervals between the respective cylindrical rollers. Each of the straddling parts is formed to be thin and branches into two along an outer circumferential surface of the cylindrical roller. In the cylindrical roller bearing described in Japanese Patent Laid-Open No. H11-44323, the straddling part is caused to be reduced in thickness and branch into two so that the straddling part has flexibility.

[Patent Document 1] Japanese Patent Laid-Open No. H11-44323

### SUMMARY

Incidentally, in order to improve lubricating properties of a bearing, it is conceivable that a plurality of spacers that maintain intervals between respective rollers be formed of an oleoresin material. In this case, the respective spacers are cantilever-supported on one side in an axial direction for convenience in molding and assembly of the oleoresin material. However, in a case of the bearing with such a configuration, a rigidity of the spacers particularly with respect to an external force in a circumferential direction tends to be weak, and there is room for improvement in this regard.

The disclosure has been made in view of the above circumstances and provides a bearing in which a rigidity of spacers with respect to an external force in a circumferential direction can be improved, and a speed reducer including the same.

A problem to be solved by the disclosure is as described above and a method for solving the problem will be described below.

In an embodiment of the disclosure, a bearing which includes an inner ring, a plurality of rollers, and a first cage and a second cage is provided. The inner ring has a cylindrical shape centered on a rotation axis extending in a front-rear direction. The plurality of rollers is disposed around the inner ring. The first cage and the second cage hold the plurality of rollers. The first cage includes a first rear ring, a front ring, and a plurality of first columnar parts. The first rear ring has an annular shape and is positioned on a rear side with respect to the plurality of rollers. The front ring has an annular shape and is positioned on a front side with respect to the plurality of rollers. The plurality of first columnar parts extends in an axial direction between the plurality of rollers and has rear end portions connected to the first rear ring and front end portions connected to the front ring. The second cage includes a second rear ring and a plurality of second columnar parts. The second rear ring has an annular shape and is positioned on the rear side with respect to the plurality of rollers. The plurality of second columnar parts extends in the axial direction between the plurality of rollers on a radially inward side of the first columnar parts and has rear end portions connected to the second rear ring. The second cage is made of an oleoresin material. The second columnar parts each include a central part, an outer part, and an inner part. The central part overlaps a virtual cylindrical surface passing through a central line of the plurality of rollers. The outer part is positioned on a radially outward side of the central part. The inner part is positioned on a radially inward side of the central part. The outer part includes a widened part having a circumferential width larger than that of the central part.

According to an embodiment of the disclosure, a bearing in which a rigidity of spacers (the second columnar parts) with respect to an external force in the circumferential direction can be improved, and a speed reducer including the same are provided.

### BRIEF DESCRIPTION OF THE DRAWINGS

FIG. 1 is a longitudinal sectional view illustrating an overall configuration of an inscribed planetary type speed reducer including a bearing according to the present embodiment.
FIG. 2 is a cross-sectional view taken along line A-A in FIG. 1.
FIG. 3 is a conceptual cross-sectional view of the bearing according to the present embodiment.
FIG. 4 is an exploded perspective view of the bearing.
FIG. 5 is a view illustrating a layout of a second cage and rollers when viewed in an axial direction.
FIG. 6 is a view illustrating a shape of a second columnar part of the second cage according to the present embodiment when it is cut along a cross section perpendicular to the axial direction.
FIG. 7 is a view illustrating a shape of a second columnar part of the second cage according to a modified example when it is cut along a cross section perpendicular to the axial direction.

### DESCRIPTION OF THE EMBODIMENTS

Hereinafter, exemplary embodiments of the disclosure will be described with reference to the accompanying drawings. In the disclosure, a direction parallel to a central axis of a speed reducer is referred to as an "axial direction," a direction perpendicular to the central axis is referred to as a "radial direction," and a direction along a circular arc centered on the central axis is referred to as a "circumferential direction." Also, one side in the axial direction is referred to as a "front side," and the other side in the axial direction is referred to as a "rear side." However, the above-described "parallel direction" includes a substantially parallel direction. Also, the above-described "perpendicular direction" includes a substantially perpendicular direction. Also, the "circumferential direction" includes a direction along a substantially circular arc.

### <1. First embodiment>

### <1-1. Overall configuration of speed reducer>

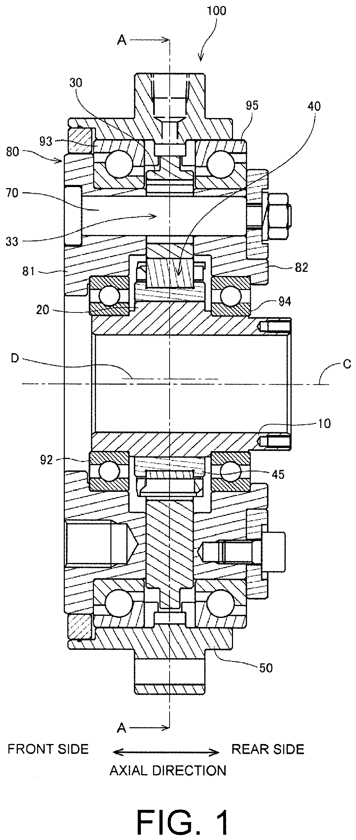

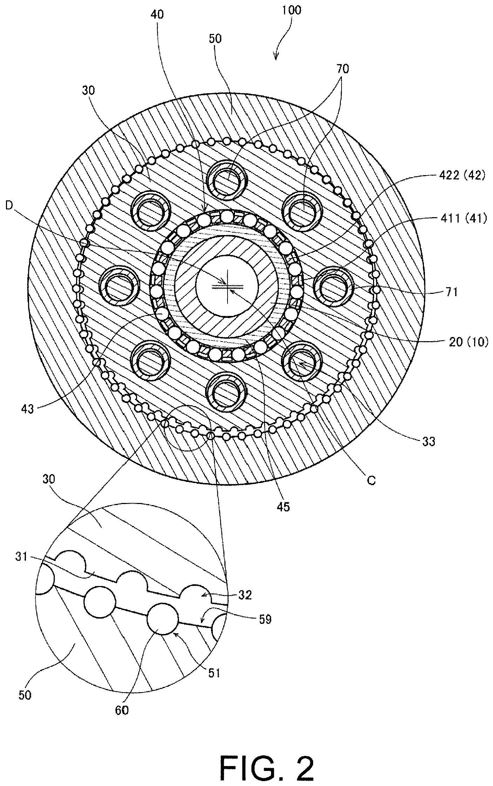

FIG. 1 is a longitudinal sectional view of a speed reducer 100 including a bearing 40 according to a first embodiment of the disclosure. FIG. 2 is a cross-sectional view of the speed reducer 100 from a position taken along line A-A in FIG. 1.

The speed reducer 100 converts a rotational motion at a first rotation speed (input rotation speed) into a rotational motion at a second rotation speed (output rotation speed) lower than the first rotation speed using an inscribed planetary type speed reduction mechanism. The speed reducer 100 is used, for example, in a joint part of a small robot such as a service robot which performs work in cooperation with a person. However, a speed reducer having an equivalent structure may be used for other applications such as a large-sized industrial robot, a machine tool, an X-Y table, a material cutting device, a conveyor line, a turntable, or a rolling roller.

As illustrated in FIG. 1, the speed reducer 100 according to the present embodiment mainly includes an input rotating part 10, an eccentric part 20, an externally toothed gear 30, the bearing 40, an internally toothed gear 50, a carrier pin 70, and an output rotating part 80.

The input rotating part 10 is a substantially cylindrical member extending in the axial direction with a central axis C of the speed reducer 100 as a center. The input rotating part 10 is connected to a motor serving as a drive source directly or via another power transmission mechanism. When the motor is driven, the input rotating part 10 rotates at the first rotation speed around the central axis C due to power supplied from the motor. That is, the input rotating part 10 is an input unit in the present embodiment. The input rotating part 10 is disposed at an axial central portion of the speed reducer 100.

The eccentric part 20 is a portion that rotates together with the input rotating part 10 at a same rotation speed as the input rotating part 10. In the present embodiment, the eccentric part 20 and the input rotating part 10 are formed of a single member. The eccentric part 20 is provided at a middle portion of the input rotating part 10 in the axial direction. The eccentric part 20 has a cylindrical outer circumferential surface centered on an eccentric axis D extending parallel to the central axis C at a position deviated from the central axis C. Accordingly, a distance from the central axis C to the outer circumferential surface of the eccentric part 20 varies according to a position in the circumferential direction. When the input rotating part 10 rotates around the central axis C, the position of the eccentric part 20 rotates around the central axis C. At this time, the eccentric axis D of the eccentric part 20 also rotates around the central axis C.

Further, as illustrated in FIG. 1, in the present embodiment, although one eccentric part 20 is provided in the middle portion of the input rotating part 10 in the axial direction, instead of this, a plurality of eccentric parts may be disposed in the middle portion of an input rotation shaft at intervals in the axial direction. At this time, when positions of eccentric axes of the plurality of eccentric parts are disposed to be rotationally symmetrical to each other with respect to the central axis, a center of gravity position of all of the plurality of eccentric parts is always positioned on the central axis. Therefore, fluctuation of the center of gravity due to rotation of the eccentric parts can be inhibited.

The externally toothed gear 30 is disposed on a radially outward side of the eccentric part 20. The bearing 40 is interposed between the eccentric part 20 and the externally toothed gear 30. A detailed configuration of the bearing 40 will be described below. The externally toothed gear 30 is supported to be rotatable around the eccentric axis D by the bearing 40. As illustrated in FIG. 2, a plurality of external teeth 31 is provided on an outer circumferential portion of the externally toothed gear 30. The respective external teeth 31 extend outward in the radial direction. Also, inter-external teeth grooves 32 recessed inward in the radial direction are provided between external teeth 31 adjacent to each other in the circumferential direction. In the present embodiment, the respective inter-external teeth grooves 32 have a shape in which an outer circumferential surface of the externally toothed gear 30 is cut out in a semicircular shape at equal intervals when viewed in the axial direction. The external teeth 31 and the inter-external teeth grooves 32 are alternately aligned in the circumferential direction around the eccentric axis D.

Also, as illustrated in FIGS. 1 and 2, the externally toothed gear 30 has a plurality (eight in the present embodiment) of through holes 33. The respective through holes 33 penetrate the externally toothed gear 30 in the axial direction. The plurality of through holes 33 is aligned at equal intervals in the circumferential direction around the eccentric axis D.

The internally toothed gear 50 is a cylindrical member that surrounds a radially outward side of the externally toothed gear 30. The internally toothed gear 50 is disposed coaxially with the central axis C. As illustrated in FIG. 2, a plurality of groove parts 51 is provided on an inner circumferential portion of the internally toothed gear 50. In the present embodiment, the respective groove parts 51 have an arcuate shape that is recessed outward in the radial direction when viewed in the axial direction. The groove parts 51 extend in the axial direction with respect to the internally toothed gear 50. Columnar internal tooth pins 60 are held in the groove parts 51 to be rotatable in the circumferential direction. The plurality of groove parts 51 is provided at equal intervals on the inner circumferential portion of the internally toothed gear 50 when viewed in the axial direction. Accordingly, a plurality of internal tooth pins 60 is also provided at equal intervals on the inner circumferential portion of the internally toothed gear 50 when viewed in the axial direction. As illustrated in FIG. 2, the internal tooth pins 60 being held in the groove parts 51 protrude inward in the radial direction from an inner circumferential surface of the internally toothed gear 50. On the inner circumferential portion of the internally toothed gear 50, portions between adjacent internal tooth pins 60 are inter-internal tooth grooves 59. The internal tooth pins 60 and the inter-internal tooth grooves 59 are alternately aligned in the circumferential direction around the central axis C.

The externally toothed gear 30 and the internally toothed gear 50 can partially mesh with each other. Specifically, a portion of the internal tooth pins 60 held by the internally toothed gear 50 is fitted to a portion of the inter-external teeth grooves 32 of the externally toothed gear 30, and thereby the externally toothed gear 30 and the internally toothed gear 50 rotate relatively.

When the input rotating part 10 rotates around the central axis C, the externally toothed gear 30 revolves around the central axis C together with the eccentric axis D. At this time, the externally toothed gear 30 revolves while changing a meshing position of the external teeth 31 of the externally toothed gear 30 and internal teeth (internal tooth pins 60) of the internally toothed gear 50 in the circumferential direction. Here, the number of internal tooth pins 60 held by the internally toothed gear 50 is larger than the number of external teeth 31 included in the externally toothed gear 30. Therefore, for each revolution of the externally toothed gear 30, a position of the external teeth 31 meshing with the internal tooth pins 60 at a same position on the internally toothed gear 50 is shifted by a difference in the number of teeth therebetween. Thereby, the externally toothed gear 30 rotates around the eccentric axis D in a direction opposite to a rotational direction of the input rotating part 10 at the second rotation speed lower than the first rotation speed. Along with this, positions of the through holes 33 of the externally toothed gear 30 also rotate at the second rotation speed. During an operation of the speed reducer 100, the externally toothed gear 30 performs such a rotational motion in which revolution and rotation are combined.

The plurality of carrier pins 70 is substantially columnar members that penetrate the externally toothed gear 30 and extend in the axial direction. As illustrated in FIG. 2, the plurality of carrier pins 70 is disposed in an annular shape around the central axis C. The carrier pins 70 are respectively inserted into the through holes 33 of the externally toothed gear 30. A bush ring 71 is interposed between an outer circumferential surface of each of the carrier pins 70 and an inner circumferential surface of each of the through holes 33. As illustrated in FIG. 2, a gap (allowance) is present between an outer circumferential surface of the bush ring 71 and the annular inner circumferential surface of the through hole 33. Thereby, when the externally toothed gear 30 rotates at the second rotation speed after deceleration, the plurality of carrier pins 70 also rotates at the second rotation speed around the central axis C by being pushed by the inner circumferential surfaces of the through holes 33 of the externally toothed gear 30.

The description returns to FIG. 1. The output rotating part 80 includes an annular front carrier member 81 and an annular rear carrier member 82. The front carrier member 81 is disposed on a front side in the axial direction with respect to the externally toothed gear 30. A second bearing 92 is interposed between the input rotating part 10 and the front carrier member 81. Also, a third bearing 93 is interposed between the front carrier member 81 and the internally toothed gear 50. The rear carrier member 82 is disposed on a rear side in the axial direction with respect to the externally toothed gear 30. A fourth bearing 94 is interposed between the input rotating part 10 and the rear carrier member 82. Also, a fifth bearing 95 is interposed between the rear carrier member 82 and the internally toothed gear 50. For example, a ball bearing may be used for the second bearing 92 and the fourth bearing 94. However, a bearing of another type such as a sliding bearing may also be used instead of the ball bearing. For example, an angular ball bearing may be used for the third bearing 93 and the fifth bearing 95. However, a bearing of another type such as a sliding bearing may also be used instead of the angular ball bearing.

An end portion of each of the carrier pins 70 on a front side in the axial direction is fixed to the front carrier member 81. An end portion of each carrier pins 70 on a rear side in the axial direction is fixed to the rear carrier member 82. Therefore, when the plurality of carrier pins 70 rotates at the second rotation speed around the central axis C, the front carrier member 81 and the rear carrier member 82 also rotate at the second rotation speed around the central axis C. Further, as a method of fixing the carrier pin 70 to the front carrier member 81 and the rear carrier member 82, for example, press-fitting may be used.

The output rotating part 80 is connected to a member to be driven directly or via another power transmission mechanism. That is, the output rotating part 80 is an output unit in the present embodiment. With such a configuration, in the speed reducer 100 of the present embodiment, rotation input to the input rotating part 10 can be significantly decelerated by the inscribed planetary type reduction mechanism, and rotation after the deceleration can be output from the output rotating part 80.

### <1-2. Configuration of bearing>

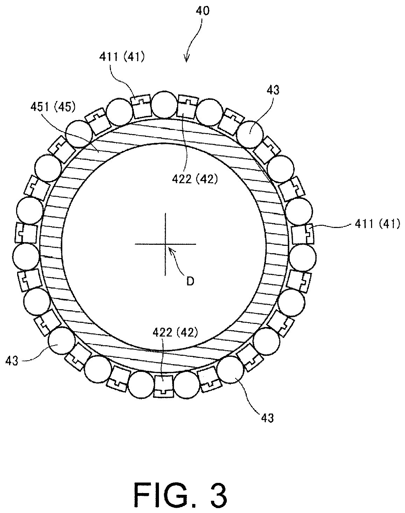

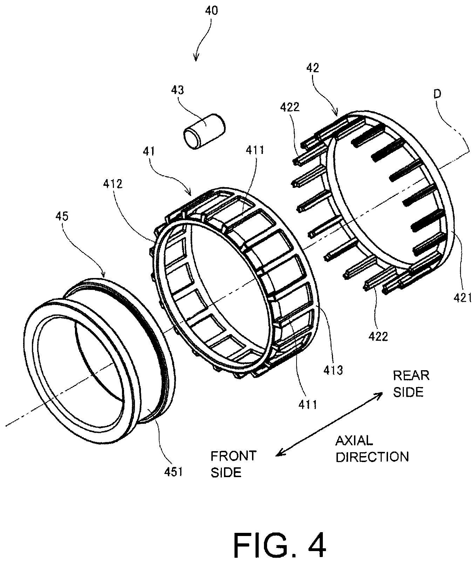

Next, a configuration of the bearing 40 according to the present embodiment will be described in detail with reference mainly to FIGS. 2 to 6. FIG. 3 is a conceptual cross-sectional view of the bearing 40 according to the present embodiment. Further, shapes of a first columnar part 411 and a second columnar part 422 to be described below are schematically illustrated in FIG. 3. FIG. 4 is an exploded perspective view of the bearing 40. As illustrated in FIGS. 3 and 4, the bearing 40 includes an inner ring 45 and a first cage 41, a second cage 42, and a plurality of rollers 43.

The inner ring 45 is disposed on a radially outward side of the eccentric part 20. The inner ring 45 is a cylindrical member centered on the eccentric axis D which is a rotation axis extending in a front-rear direction. When the input rotating part 10 rotates, the inner ring 45 rotates around the central axis C together with the eccentric axis D. As illustrated in FIG. 4, the inner ring 45 includes a groove part 451 recessed in an annular shape along the circumferential direction on the outer circumferential surface. The plurality of rollers 43 which is the rollers of the bearing 40 is disposed around the inner ring 45. The plurality of rollers 43 is disposed along the groove part 451 on an outer circumferential surface of the inner ring 45. Therefore, movement of the plurality of rollers 43 in the axial direction is restricted on an outer circumferential portion of the inner ring 45. Also, as illustrated in FIG. 2, the plurality of rollers 43 is in contact with an inner circumferential surface of the externally toothed gear 30. Further, although the number of rollers 43 included in the bearing 40 is 19 in the present embodiment, the number may be more or less than that.

The first cage 41 and the second cage 42 hold the plurality of rollers 43 on the outer circumferential portion of the inner ring 45. The first cage 41 is a molded product processed by molding a resin material. The second cage 42 is a molded product processed by molding an oleoresin material. The second cage 42 may be molded, for example, by injecting an oleoresin material in a substantially liquid state into a mold and performing heat treatment.

As illustrated in FIG. 3, the first cage 41 is disposed on a radially outward side of the inner ring 45. The first cage 41 is rotatable relative to the inner ring 45 around the eccentric axis D. The first cage 41 includes a first rear ring 413, a front ring 412, and the plurality of first columnar parts 411.

The first rear ring 413 has an annular shape and is disposed on a radially outward side of a rear end portion in the axial direction of the inner ring 45. The first rear ring 413 is positioned on a rear side in the axial direction with respect to the plurality of rollers 43. The front ring 412 has an annular shape and is disposed on a radially outward side of a front end portion in the axial direction of the inner ring 45. The front ring 412 is positioned on a front side in the axial direction with respect to the plurality of rollers 43. The plurality of first columnar parts 411 extends in the axial direction between the plurality of rollers 43. The plurality of first columnar parts 411 is disposed at equal intervals in the circumferential direction. End portions of the plurality of first columnar parts 411 on a rear side in the axial direction are connected to the first rear ring 413. End portions of the plurality of first columnar parts 411 on a front side in the axial direction are connected to the front ring 412.

The plurality of rollers 43 is respectively disposed between the first columnar parts 411 adjacent to each other in the circumferential direction. Also, a portion of the rollers 43 is positioned on a radially outward side of the first columnar parts 411. Further, although the number of first columnar parts 411 is 19 in the present embodiment, the number may be more or less than that.

As described above, the plurality of first columnar parts 411 has the end portions on the front side in the axial direction connected to the front ring 412 in addition to the end portions on the rear side in the axial direction connected to the first rear ring 413. Thereby, a structure of the first cage 41 is strengthened.

As illustrated in FIG. 3, the second cage 42 is disposed on a radially outward side of the inner ring 45. The second cage 42 is fixed to the first cage 41. The second cage 42 is rotatable relative to the inner ring 45 around the eccentric axis D at the same rotation speed as the first cage 41. As illustrated in FIG. 4, the second cage 42 includes a second rear ring 421 and the second columnar parts 422.

The second rear ring 421 has an annular shape and is disposed on a radially outward side of the rear end portion of the inner ring 45 and on a radially inward side of the first rear ring 413. The second rear ring 421 is positioned on a rear side in the axial direction with respect to the plurality of rollers 43. The plurality of second columnar parts 422 extends in the axial direction between the plurality of rollers 43 on a radially inward side of the first columnar parts 411. The plurality of second columnar parts 422 is disposed at equal intervals in the circumferential direction. End portions of the plurality of second columnar parts 422 on a rear side in the axial direction are connected to the second rear ring 421. In other words, the plurality of second columnar parts 422 is cantilever-supported on the second rear ring 421.

The second cage 42 is engaged with the first cage 41. At this time, the first columnar parts 411 and the second columnar parts 422 overlap in the radial direction. That is, the second columnar parts 422 are disposed immediately inward from the first columnar parts 411 in the radial direction.

The plurality of rollers 43 is held by the plurality of second columnar parts 422 on the outer circumferential portion of the inner ring 45. Also, since the plurality of rollers 43 is held by the second columnar parts 422, movement of the rollers 43 in the circumferential direction is restricted on the outer circumferential portion of the inner ring 45. In other words, intervals between rollers 43 adjacent to each other in the circumferential direction is kept constant by the second columnar parts 422 functioning as a spacer. The rollers 43 rotate in the circumferential direction while being in surface contact with the second columnar parts 422. In this way, the rollers 43 are lubricated by a lubricating oil that has exuded from the second columnar parts 422.

In the bearing having the above-described configuration, since the second columnar parts are cantilever-supported on the second rear ring and the second cage is formed of an oleoresin material which generally has a low strength, a rigidity of the second cage with respect to an external force in the circumferential direction tends to be weak. Therefore, an improvement plan for this has been desired. In this regard, the second cage 42 of the bearing 40 according to the present embodiment has a specific configuration for improving the rigidity with respect to an external force in the circumferential direction.

### <1-3. Configuration of second columnar part of second cage>

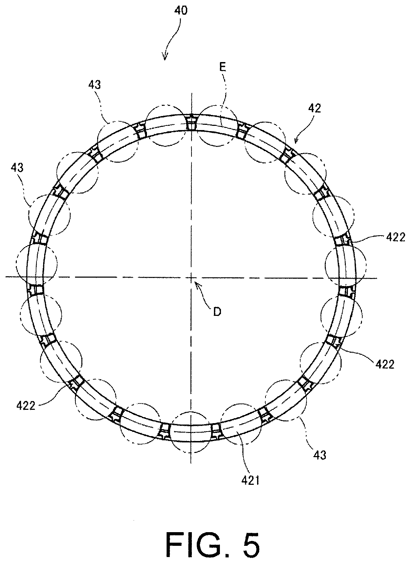

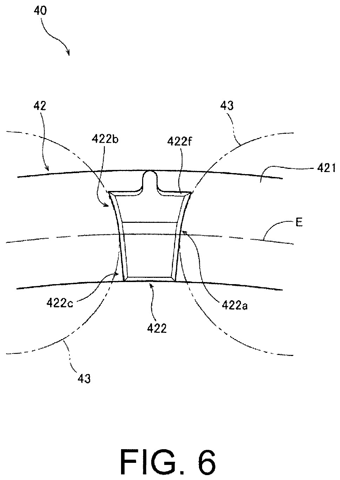

Hereinafter, a configuration of the second columnar parts 422 of the second cage 42 specific to the present embodiment will be described in detail with reference to FIGS. 5 and 6. FIG. 5 is a view illustrating a layout of the second columnar parts 422 of the second cage 42 and the rollers 43 when viewed from the front in the axial direction. FIG. 6 is a view illustrating a shape of the second columnar parts 422 of the second cage 42 according to the present embodiment when viewed from the front in the axial direction.

Each of the second columnar parts 422 includes a central part 422a, an outer part 422b, and an inner part 422c when viewed in the axial direction. The central part 422a is a portion (region) that overlaps a virtual cylindrical surface E passing through a central line of the plurality of rollers 43. The central part 422a has a width in the circumferential direction.

The outer part 422b is a portion positioned on a radially outward side of the central part 422a. A width in the circumferential direction of the outer part 422b gradually increases outward in the radial direction. The outer part 422b includes a widened part 422f having a circumferential width larger than that of the central part 422a at an end portion on a radially outward side. In the present embodiment, side surfaces on both sides in the circumferential direction of the outer part 422b have an arcuate shape along surfaces of the rollers 43 adjacent thereto when viewed in the axial direction.

The inner part 422c is a portion positioned on a radially inward side of the central part 422a. In the present embodiment, a circumferential width of the inner part 422c is smaller than a circumferential width of the central part 422a. Specifically, the circumferential width of the inner part 422c gradually decreases inward in the radial direction. In the present embodiment, side surfaces on both sides in the circumferential direction of the inner part 422c are substantially linear when viewed in the axial direction. The side surfaces on both sides (both side surfaces) in the circumferential direction of the inner part 422c are separated from surfaces of the rollers 43 adjacent thereto when viewed in the axial direction. In other words, gaps are provided between the side surfaces of the inner part 422c and outer circumferential surfaces of the rollers 43 when viewed in the axial direction.

As described above, the outer part 422b of the second cage 42 according to the present embodiment includes the widened part 422f at the end portion on the radially outward side. Therefore, a rigidity of the second columnar part 422 can be improved with respect to an external force in the circumferential direction applied by the inner circumferential surface of the externally toothed gear 30 coming into contact with the roller 43 or the like.

Also, since the outer part 422b of the second columnar part 422 of the second cage 42 includes the widened part 422f, a cross-sectional area when the second columnar part 422 is cut along a plane perpendicular to the axial direction can be increased. Thereby, a lubrication performance in which the second columnar part 422 comes into contact with the roller 43 and lubricates the roller 43 can be improved.

In the bearing 40 according to the present embodiment, the circumferential width of the inner part 422c is smaller than the circumferential width of the central part 422a. Also, a clearance is provided between the side surface of the inner part 422c and the outer circumferential surface of the roller 43 when viewed in the axial direction. Thereby, contact between the inner part 422c and the roller 43 can be inhibited. Accordingly, even when there is a positive dimensional error in the second cage 42, the roller 43 is not pushed radially outward. Thereby, large frictional resistance that may be generated between the roller 43 and the second columnar part 422 in use of the bearing 40 can be suppressed. As a result, a problem such as excessive frictional heat occurring and melting the second cage 42 or surrounding members can be prevented from being caused.

Also, in the bearing 40 according to the present embodiment, the circumferential width of the inner part 422c gradually decreases inward in the radial direction. Thereby, contact between the inner part 422c and the roller 43 can be further inhibited.

Also, in the bearing 40 according to the present embodiment, the side surfaces on both sides in the circumferential direction of the outer part 422b of the second columnar part 422 have an arcuate shape along the surfaces of the rollers 43 adjacent thereto when viewed in the axial direction. Thereby, the circumferential width of the outer part 422b can be extended to the maximum. As a result, the rigidity of the second columnar part 422 can be further improved. Also, since a contact area between the second columnar part 422 and the roller 43 is increased, the roller 43 can be satisfactorily lubricated. Further, when the outer part 422b of the second columnar part 422 is in contact with the roller 43, unlike a case in which the inner part 422c is in contact with the roller 43, the second columnar part 422 is not pushed and extended outward in the radial direction. Therefore, there is little likelihood that an excessive stress will be applied to the second cage 42 (the second columnar part 422).

### <2. Modified example>

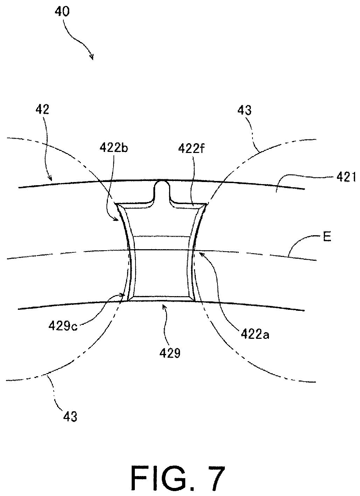

Next, the bearing 40 according to a modified example of the first embodiment of the disclosure will be described with reference to FIG. 7. FIG. 7 is a view illustrating a shape of a second columnar part 429 of the second cage 42 according to the modified example when viewed from the front in the axial direction. The second cage 42 according to the modified example is different from the second cage 42 according to the first embodiment in that the second columnar part 429 is provided instead of the second columnar part 422. In other points, the second cage 42 according to the modified example is the same as the second cage 42 according to the first embodiment. In the following description, members having the same configuration and function as those illustrated in the first embodiment will be denoted by the same reference signs, and duplicate description thereof will be omitted.

When viewed in the axial direction, the second columnar part 429 according to the modified example includes a central part 422a, an outer part 422b, and an inner part 429c.

The inner part 429c is a portion positioned on a radially inward side of the central part 422a when viewed in the axial direction. In the present embodiment, a circumferential width of the inner part 429c gradually increases inward in the radial direction. In the present embodiment, side surfaces on both sides in a circumferential direction of the inner part 429c are formed in a curved shape when viewed in the axial direction. Gaps between the side surfaces on both sides of the inner part 429c in the circumferential direction and the rollers 43 adjacent thereto gradually becomes wider inward in the radial direction.

As described above, in the inner part 429c of the second columnar part 429 of the second cage 42 according to the present modified example, a circumferential width gradually increases inward in the radial direction. Thereby, a cross-sectional area when the second columnar part 429 is cut along a plane perpendicular to the axial direction can be further increased. As a result, a lubrication performance in which the second columnar part 422 comes into contact with the roller 43 and lubricates the roller 43 can be further improved.

### <3. Other modified examples>

In the first embodiment, the circumferential width of the inner part 422c is smaller than the circumferential width of the central part 422a. However, instead of this, the circumferential width of the inner part 422c may be the same as the circumferential width of the central part 422a.

In the above-described embodiment, the bearing 40 is provided in the inscribed planetary type speed reducer 100 but the disclosure is not limited thereto. That is, the bearing 40 can be broadly applied to various devices other than the speed reducer 100.

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

The disclosure can be used for bearings and speed reducers.

### [Reference Signs List]

10 Input rotating part
20 Eccentric part
30 Externally toothed gear
40 Bearing
41 First cage
42 Second cage
43 Roller
45 Inner ring
50 Internally toothed gear
60 Internal tooth pin
100 Speed reducer
411 First columnar part
412 Front ring
413 First rear ring
421 Second rear ring
422 Second columnar part
422a Central part
422b Outer part
422c Inner part
422f Widened part
451 Groove part
C Central axis
D Eccentric axis
E Virtual cylindrical surface

## Claims

1. A bearing (40), **characterized in that**, the bearing (40) comprising:
an inner ring (45) in cylindrical shape, centered on a rotation axis (D) extending in a front-rear direction;
a plurality of rollers (43), disposed around the inner ring (45); and
a first cage (41) and a second cage (42) which hold the plurality of the rollers (43),
wherein
the first cage (41) includes:
a first rear ring (413) in an annular shape, positioned on a rear side with respect to the plurality of the rollers (43);
a front ring (412) in an annular shape, positioned on a front side with respect to the plurality of the rollers (43); and
a plurality of first columnar parts (411), extending in an axial direction between the plurality of the rollers (43) and having rear end portions connected to the first rear ring (413) and front end portions connected to the front ring (412),
the second cage (42) includes:
a second rear ring (421) in an annular shape, positioned on the rear side with respect to the plurality of the rollers (43); and
a plurality of second columnar parts (422), extending in the axial direction between the plurality of the rollers (43) on a radially inward side of the first columnar parts (411) and having rear end portions connected to the second rear ring (421),
the second cage (42) is made of an oleoresin material,
the second columnar parts (422) each include:
a central part (422a) which overlaps a virtual cylindrical surface (E) passing through a central line of the plurality of the rollers (43);
an outer part (422b) which is positioned on a radially outward side of the central part (422a); and
an inner part (422c) which is positioned on a radially inward side of the central part (422a), and
the outer part (422b) includes a widened part (422f) having a circumferential width larger than that of the central part (422a).

2. The bearing (40) according to claim 1, wherein
a circumferential width of the inner part (422c) is the same as a circumferential width of the central part (422a) or smaller than the circumferential width of the central part (422a).

3. The bearing (40) according to claim 2, wherein
the circumferential width of the inner part (422c) gradually decreases inward in the radial direction.

4. The bearing (40) according to claim 2 or 3, wherein
side surfaces on both sides in the circumferential direction of the inner part (422c) are linear when viewed in the axial direction.

5. The bearing (40) according to any one of claims 1 to 4, wherein
a circumferential width of the outer part (422b) gradually increases outward in the radial direction.

6. The bearing (40) according to claim 5, wherein
side surfaces on both sides in the circumferential direction of the outer part (422b) have an arcuate shape along surfaces of the rollers (43) adjacent thereto when viewed in the axial direction.

7. A speed reducer (100) which converts a rotational motion at an input rotation speed into a rotational motion at an output rotation speed which is lower than the input rotation speed, **characterized in that**, the speed reducer (100) comprising:
a bearing (40) according to any one of claims 1 to 6.

8. The speed reducer (100) according to claim 7, comprising:
an input rotating part (10) which rotates at the input rotation speed around a central axis (C) extending in a front-rear direction;
an eccentric part (20) in disc shape which rotates together with the input rotating part (10) and whose distance from the central axis (C) to an outer circumferential surface varies according to a position in a circumferential direction;
the bearing (40), positioned on a radially outward side of the eccentric part (20);
an externally toothed gear (30), positioned on a radially outward side of the bearing (40);
an internally toothed gear (50) in cylindrical shape, positioned on a radially outward side of the externally toothed gear (30) and disposed coaxially with the central axis (C);
a plurality of carrier pins (70), extending in an axial direction through a plurality of through holes (33) provided in the externally toothed gear (30); and
an output rotating part (80), fixed to the plurality of the carrier pins (70) and rotating at the output rotation speed around the central axis (C).
